# EUROPÄISCHE PATENTSCHRIFT

(11) **EP 3 882 473 B1**
(45) Veröffentlichungstag und Bekanntmachung des Hinweises auf die Patenterteilung: **15.11.2023**
(21) Anmeldenummer: 21162759.1
(22) Anmeldetag: 16.03.2021
(51) Int. Cl.: F16B 5/00, F16B 5/06, F16B 5/07, F16B 7/04

(54) **KLICK-VERBINDUNG**
CLICK-CONNECTION
CONNEXION À CLIQUER ENSEMBLE

(30) Priorität: 17.03.2020 CH 3092020
(43) Veröffentlichungstag der Anmeldung: 22.09.2021
(73) Patentinhaber: Scherer, Karl, 5646 Abtwil (CH)
(72) Erfinder: Scherer, Karl, 5646 Abtwil (CH)
(74) Vertreter: Felber, Josef

(56) Entgegenhaltungen:
- WO-A1-2019/137824
- ES-U- 1 220 438
- JP-A- 2016 056 859
- US-A- 6 036 398
- US-A1- 2013 287 484

## Beschreibung

Diese Erfindung betrifft eine Klick-Verbindung, mittels welcher zwei Profile, Platten, Elemente egal welcher Art und aus welchem Material bestehend, werkzeuglos, rasch, satt und zugkraftschlüssig miteinander verbunden werden können.

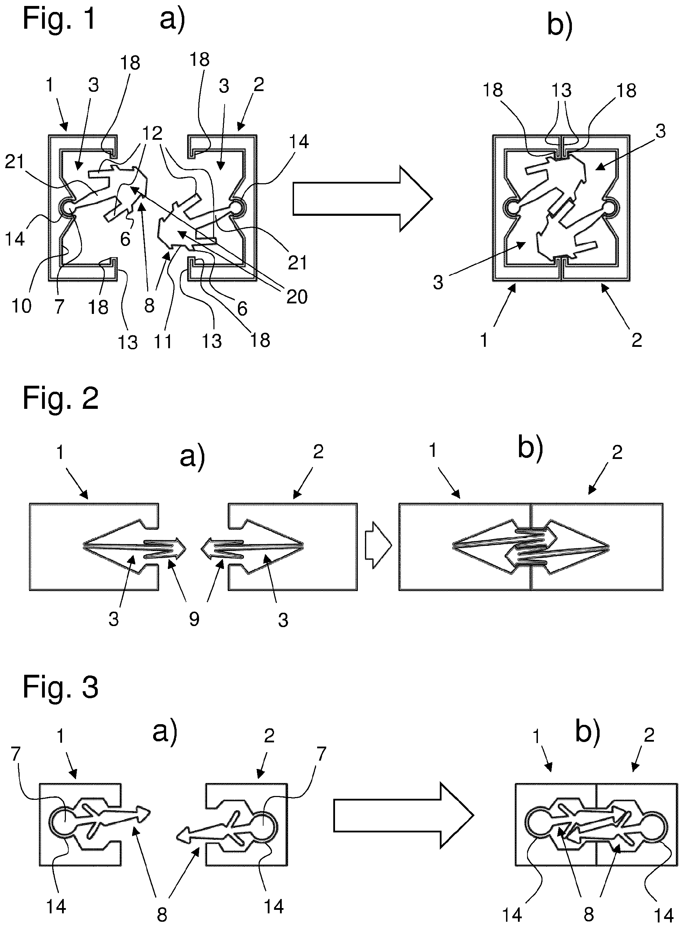

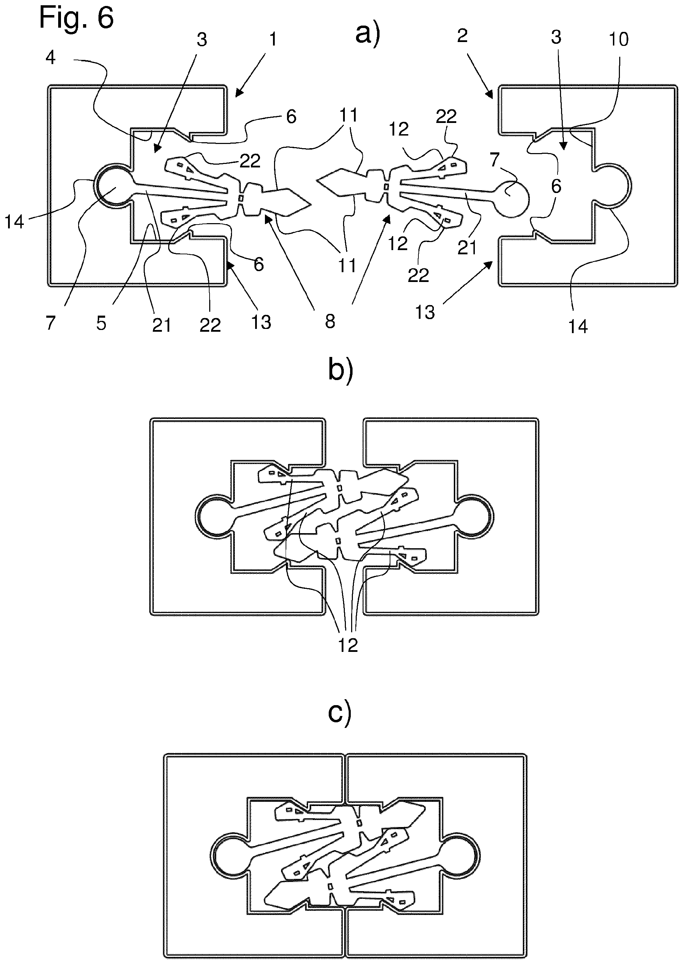

Klick-Verbindungen sind im Grundsatz bekannt, doch weisen die bekannten Klick-Systeme noch Nachteile auf, die es auszumerzen gilt. Viele dieser bekannten Klick-Systeme sind für ganz bestimmte Anwendungen ausgelegt, für ganz bestimmte Verbindungen von meist zwei unterschiedlichen Gegenständen, die im Zuge einer Montage miteinander verbunden werden müssen, zum Beispiel zum Montieren einer Blende auf eine Profilkonstruktion irgendwelcher Art, oder zur Montage von Rohren oder zum Festklemmen von Elektrodrähten etc. und sie sind nicht unbedingt darauf ausgerichtet, eine satt verbindende, und besonders zugkraftschlüssige Verbindung zu erzeugen, die mit grossen Zug- und auch Querkräften belastbar ist. WO 2019/1 37824 A1 zeigt in Figur 1-4 sowie beschrieben auf Seite 3, Zeilen 9-24 und auf Seite 8, Zeile 22 bis Seite 9, Zeile eine Anordnung zur flüssigkeitsdichten Verbindung von Belagplatten, die vom Laien einfach und werkzeuglos zur Herstellung einer vollständig ebenen Fläche aus Belagplatten verwendet werden kann. Diese Anordnung umfasst zwei Belagplatten" wobei umlaufend entlang der Kanten der Belagsplatten ein mindestens eine Raststruktur (9) aufweisendes Profil (2) angeordnet ist, und eine Feder (3), die auf gegenüberliegenden Seiten jeweils einen Rastschenkel (11) aufweist, der zur rastenden Verbindung mit jeweils einer Raststruktur (9) der Belagplatte gestaltet ist. Die Feder (3) ist auf mindestens einer Seite eines zwischen den Rastschenkeln (11) angeordneten Mittelabschnitts eine mit diesem fest verbundene Dichtstruktur (10) aus Weichkunststoff, so dass bei beidseitiger Rastung der Feder (3) in jeweils eine Belagplatte die Dichtstruktur (10) dichtend gegen die Profile (2) beider Belagplatten gepresst wird. Es handelt sich daher um Klick-Verbindung für zwei miteinander satt und kraftschlüssig zu verbindende Formstücke (2), im gezeigten Beispiel Belagplatten. Diese weisen auf der Seite mit der zu verbindenden Fläche eine Nut (Figur 3) auf, innerhalb welcher auf beiden Flankenseiten (Figur 3) der Nut Hinterschnitt-Flächen oder Nocken (9) als Rückhalteflächen ausgeformt sind. Die zugehörigen Rückhalte-Elemente (3) selbst sind elastisch biegsam oder formen hinten beidseits federnde Flügel (11) aus, sodass zwei mit den offenen Seiten der Nuten (Figur 3) gegeneinander hin gerichtete Formstücke (2) durch überlappendes Ineinanderschieben der beiden Rückhalte-Elemente (3) unter federndem Verbiegen oder elastischem Nachgeben der Flügel (11) zu einer formschlüssigen Verbindung zusammenklickbar sind. Dabei haken die Rückhalte-Elemente (3) mit ihren Hinterschnitt-Flächen oder Rückhalteflächen aneinander ein und auch an den Rückhalte-Flächen (9) in den Nuten (Figur 3) der jeweils gegenüberliegenden Formstücke ein (Figuren 1-2). US 2013/287484 A1 zeigt diese Merkmale ebenfalls, etwa in den Figuren 6-8 sowie den Absätzen [0061]-[0065].

Die Aufgabe der vorliegenden Erfindung ist es vor dem Hintergrund dieses Standes der Technik, eine solche Klick-Verbindung zu schaffen, die das rasche und narrensicher einfache und werkzeuglose Erstellen einer satten, zugkraftschlüssigen und stark auf Zug- und Querkräfte belastbaren Verbindung für vielerlei Zwecke ermöglicht, und die ausserdem kostengünstig herstellbar ist.

Die Aufgabe wird gelöst von einer Klick-Verbindung, gemäß Anspruch 1, für zwei miteinander satt und kraftschlüssig zu verbindende Formstücke, mit zwei für die Verbindung identisch ausgeformten Formstücken, indem diese auf der Seite mit der zu verbindenden Fläche eine Nut aufweisen, innerhalb welcher auf beiden Flankenseiten der Nut Hinterschnitt-Flächen oder Nocken als Rückhalteflächen ausgeformt sind, oder ein auf zwei gegenüberliegenden Seiten wirkendes Rückhalte-Element in die Nut einschiebbar ist, und weiter dass die Rückhalte-Elemente selbst elastisch biegsam sind oder hinten beidseits federnde Flügel ausformen, sodass zwei mit den offenen Seiten der Nuten gegeneinander hin gerichtete Formstücke durch überlappendes Ineinanderschieben der beiden Rückhalte-Elemente unter federndem Verbiegen oder elastischem Nachgeben der Flügel zu einer formschlüssigen Verbindung zusammenklickbar sind, unter Einhaken oder Anschlagen der Rückhalte-Elemente mit ihren Hinterschnitt-Flächen oder Rückhalteflächen aneinander und an den Rückhalte-Flächen in den Nuten der jeweils gegenüberliegenden Formstücke,
wobei sich diese Klick-Verbindung *dadurch auszeichnet,*
dass in der Nut ein darin um eine Achse, die in Längsrichtung der Nut verläuft, schwenkbar oder seitlich verschiebbar einsetzbares Rückhalte-Element vorhanden ist oder ein darin in dieser Nut um eine solche Achse elastisch schwenkbares Rückhalte-Element am Nutboden einstückig angeformt ist, wobei diese Rückhalte-Elemente die Nut nach aussen überragen und im Bereich ihrer Spitze beidseits als Rückhalteflächen oder Widerhaken wirkende Hinterschnitt-Flächen ausformen, und weiter dass die Rückhalte-Elemente selbst elastisch biegsam sind oder hinten beidseits federnde Flügel ausformen, sodass zwei mit den offenen Seiten der Nuten gegeneinander hin gerichtete Formstücke durch überlappendes Ineinanderschieben der beiden Rückhalte-Elemente unter federndem Verbiegen oder elastischem Nachgeben der Flügel zu einer formschlüssigen satten und zugkraftschlüssigen Verbindung zusammenklickbar sind, unter Einhakens oder Anschlagens der Rückhalte-Elemente mit zugehörigen Hinterschnitt-Flächen aneinander und in den Nuten der jeweils gegenüberliegenden Formstücke.

Anhand der Figuren werden verschiedene Ausführungen solcher Klick-Verbindungen in der nachfolgenden Beschreibung vorgestellt und ihr Aufbau und ihre Funktion wird erläutert.

Es zeigt:
- Figur 1 a und b :: eine Klick-Verbindung mit zwei Formstücken mit gesondert einsetzbaren, als Widerhaken wirkenden Rückhalte-Elementen, a) vor und b) nach dem Verbinden durch Zusammenklicken;
- Figur 2 a und b :: eine Klick-Verbindung mit zwei Formstücken mit im Innern der Nuten einstückig angeformten Rückhalte-Elementen mit Hinterschnitt-Flächen, a) vor und b) nach dem Verbinden durch Zusammenklicken;
- Figur 3 a und b :: eine Klick-Verbindung mit zwei Formstücken mit gesondert einsetzbaren Rückhalte-Elementen mit Hinterschnitt-Flächen, a) vor und b) nach dem Verbinden durch Zusammenklicken;

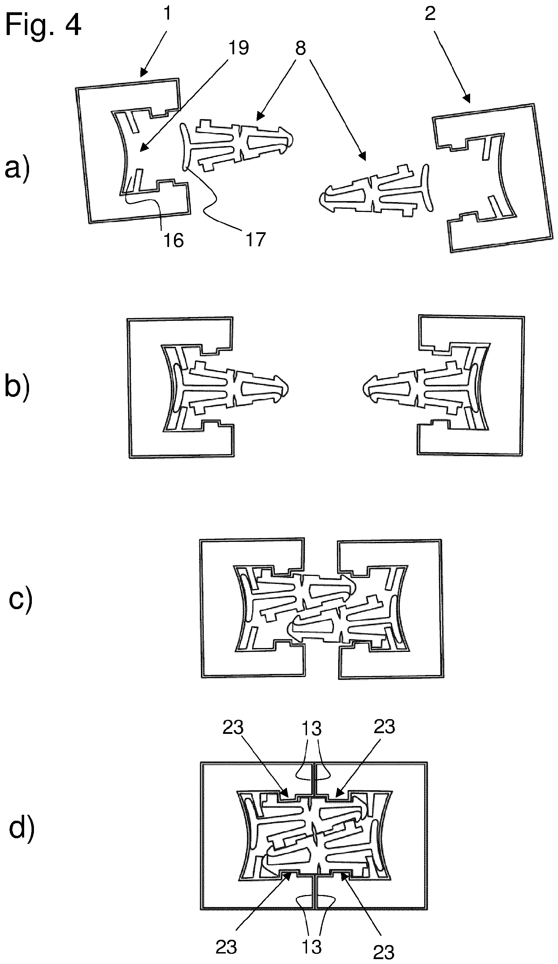

- Figur 4 a bis d :: eine Klick-Verbindung mit zwei Formstücken mit gesondert einsetzbaren, innerhalb der Nut hin und her verschiebbaren, als Widerhaken wirkenden Rückhalte-Elementen, a) vor dem Einsetzen der Rückhalte-Elemente, b) nach dem Einsetzen der Rückhalte-Elemente, c) während des Zusammenschiebens und d) nach dem Verbinden durch Zusammenklicken der beiden Formstücke;

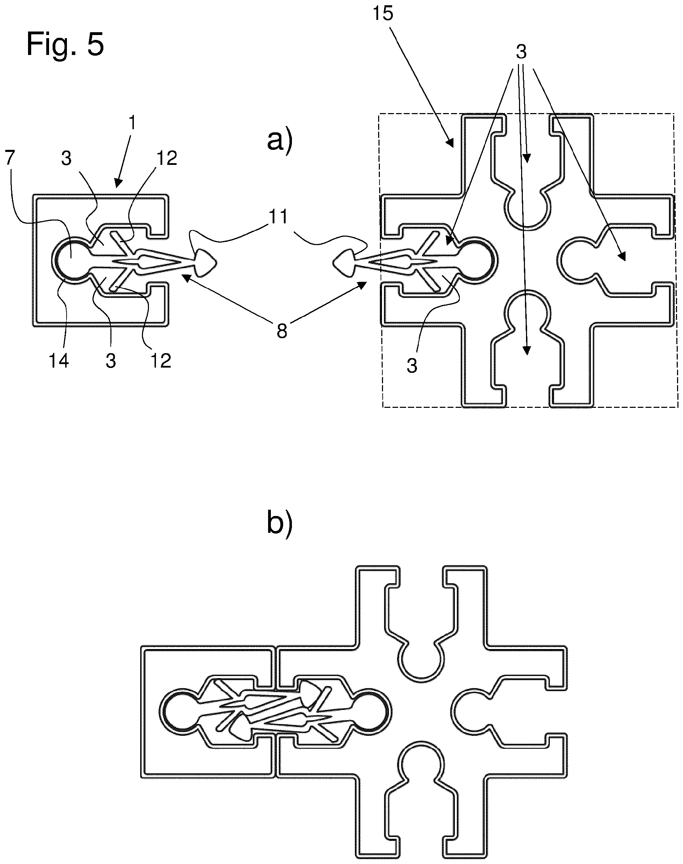

- Figur 5 a und b :: eine Klick-Verbindung mit in das Formstück einsetzbaren, als Widerhaken wirkenden Rückhalte-Elementen, wobei das eine Formstück ein Vierfach-Profil ist mit vier Nuten, a) vor dem Zusammenklicken der beiden Formstücke mit den Rückhalte-Elementen in ihrer Nut und b) nach dem Verbinden durch Zusammenklicken der beiden Formstücke;
- Figur 6 a bis c :: eine Klick-Verbindung mit in die Formstücke einsetzbaren Rückhalte-Elementen mit Hinterschnitt-Flächen, a) vor dem Zusammenklicken und noch vor dem Einsetzen eines der Rückhalte-Elemente, b) während des Zusammenschiebens der beiden Formstücke und c) nach dem vollendeten Verbinden durch Zusammenklicken der beiden Formstücke, wonach die Hinterschnitt-Flächen an Rückhalteflächen anschlagen;

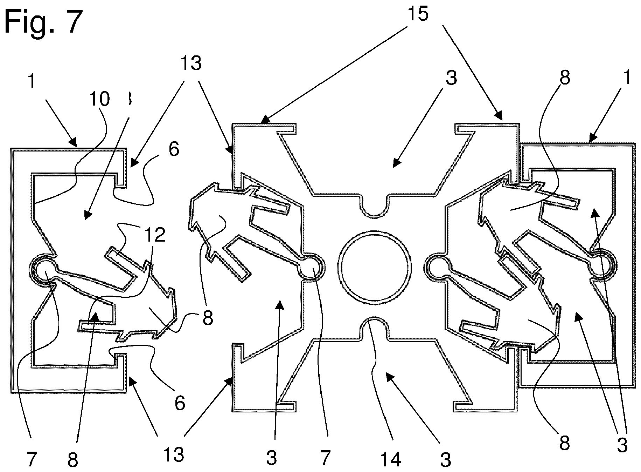

- Figur 7 :: eine Klick-Verbindung mit in die Formstücke einsetzbaren, als Widerhaken wirkenden Rückhalte-Elementen, wobei in der linken Bildhälfte das linke Formstück mit seinem eingesetzten Rückhalte-Element einem zweiten Formstück in Form eines Mehrfachprofils mit gleichem Rückhalte-Element in einer seiner Nuten gegenüberliegt, und in der rechten Bildhälfte dieses Mehrfachprofil mit einem solchen Formstück zusammengeklickt abgebildet ist;

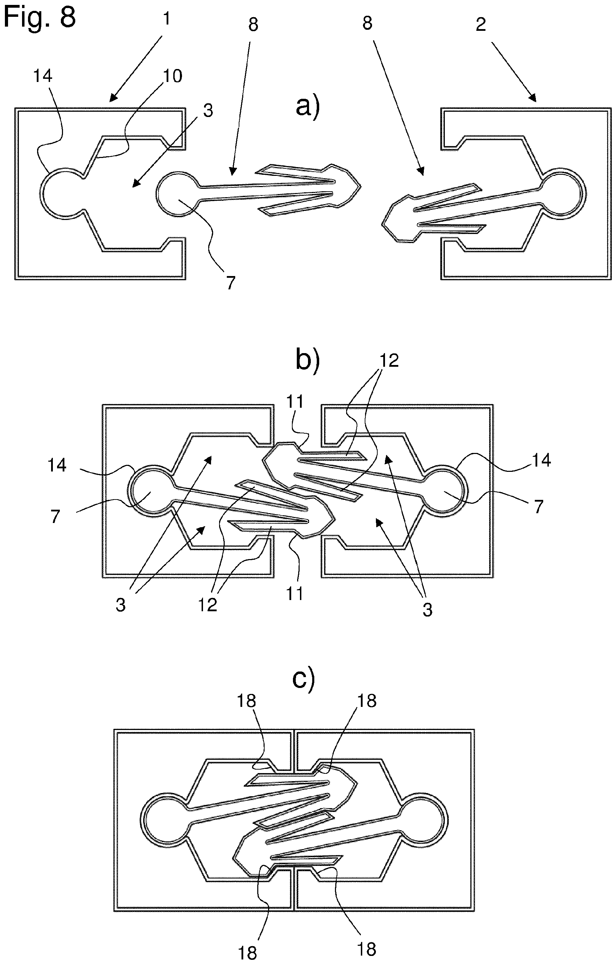

- Figur 8 a bis c :: eine Klick-Verbindung mit in die Formstücke schwenkbar einsetzbaren Rückhalte-Elementen mit Hinterschnitt-Flächen, in a) vor dem Zusammenklicken, in b) beim Zusammenschieben und in c) nach fertig erstellter satter und auf Zugkraft belastbarer Verbindung, wonach die Hinterschnitt-Flächen an Rückhalteflächen anschlagen;

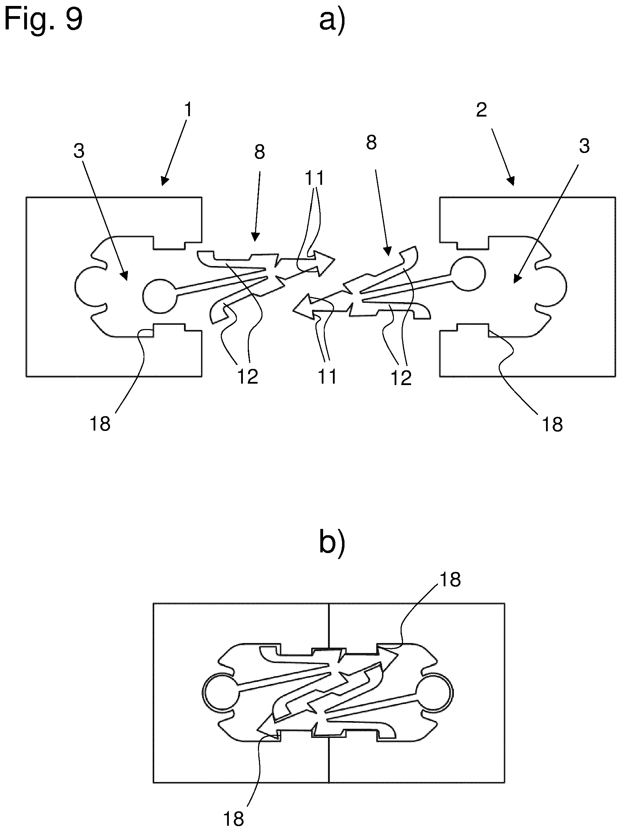

- Figur 9 a und b:: eine Klick-Verbindung, in Figur 14 a in offenem Zustand und in Figur 14 b mit den als Widerhaken wirkenden Rückhalte-Elementen zusammengeklickt.

Das Grundprinzip dieser Klick-Verbindung erschliesst schon aus **Figur 1****.** Sie zeigt eine Klick-Verbindung mit zwei Formstücken 1, 2 mit gesondert einsetzbaren Rückhalte-Elementen 8, wie am besten anhand von **Figur 1a****)** ersichtlich. Bei diesen Formstücken 1, 2 handelt es sich im Wesentlichen um U-Profile, die hier so abgelegt sind, dass die offenen Seiten der Us einander gegenüber liegen. Die Frontseiten 13 liegen dann einander gegenüber und sie sollen satt auf Stoss miteinander verbunden werden. Die Nut 3 bildet in den Formstücken 1, 2 je einen Nutboden 10, und aus diesem Nutboten 10 ausgenommen erkennt man hier je eine im Querschnitt kreisförmige Aufnahmenut 14. In der Innenseite der Nut 3 sind die Rückhalte-Elemente 8 eingesetzt. Die zu diesen Formstücken 1, 2 zugehörigen Rückhalte-Elemente 8 sind hierzu mit ihrem hinteren zylindrischen Ende 7 in die Aufnahmenut 14 von oben oder von unten her eingeschoben, also in Längsrichtung zur Aufnahmenut 14 in dieselbe eingeschoben, und die zylinderförmigen Enden 7 wirken deshalb wie Keder. Daher sind diese Rückhalte-Elemente 8 anschliessend in diesen Aufnahmenuten 14 schwenkbar aber zugkräftig gehalten. Die beiden Rückhalte-Elemente 8 sowie die beiden Formstücke 1, 2 sind baugleich und daher austauschbar. Jedes Formstück mit Rückhalte-Element Clip passt zu jedem anderen Formstück mit einem Rückhalte-Element gleicher Bauart. Positiv und negativ, männlich oder weiblich sind daher unwichtig und müssen nicht beachtet werden. Die Elemente sind alle zueinander identisch ausgeführt. Die Rückhalte-Elemente 8 laufen vorne in eine stumpfe Spitze aus, wobei diese Spitzen hier stumpfe Pfeile ausformen. Nach hinten anschliessend folgt ein breiter werdender Körper 20 dieser Rückhalte-Elemente 8, wobei dieser Körper 20 nach hinten beidseitig in elastische Federn 12 ausläuft. Seitlich sind an diesen Körpern 20 der Rückhalte-Elemente 8 sind Hinterschnitt-Flächen ausgebildet, die im vorliegenden Fall Widerhaken 6 in Form von Nocken bilden. Weiterhin sind Rückhalteflächen 18 oder Nocken beidseits nahe der Mündung der beiden Nuten 3 ausgeformt.

Sowohl die Formstücke 1, 2 wie auch die Rückhalte-Elemente 8 mit ihren Hinterschnitt-Flächen sind als flächige Elemente ausgeführt, das heisst die hier sichtbare obere Ebene ist eben, wie auch die Unterseite, mit der diese Elemente flach auf einer ebenen Unterlage aufliegen können. An jedem Rückhalte-Element 8 folgt nach der rauten- oder pfeilförmigen Spitze mit ihren beidseitig anschliessenden Seiten und Kanten 11 ein Schwanzteil 21, das schliesslich in das Ende 7 ausläuft, welches mit seiner zylindrischen Form einen Keder bildet. Beidseits des Schwanzteils 21 des Rückhalte-Elementes 8 formt sein Körper 20 hier je einen elastisch federnden Flügel 12 aus, der nach hinten ausläuft und welcher je einen äusseren Nocken als Widerhaken 6 bildet. Diese beiden Formstücke 1, 2 können nun gegeneinander hin verschoben und zusammengeschoben werden. Dabei schieben die beiden Rückhalte-Elemente 8, weil ja jedes sein Formstück 1, 2 überragt, aneinander vorbei. Die federnden Flügel 12 müssen hierzu leicht elastisch deformiert werden, um am Nocken bzw. Widerhaken 6 des jenseitigen Rückhalte-Elementes 8 vorbei gleiten zu können. Nach Passieren dieser Nocken bzw. Widerhaken 6 klicken bzw. rasten diese Flügel 12 mit ihren hinteren Enden an diesen Widerhaken 6 des dann anliegenden Flügels 12 des anderen Rückhalte-Elementes 8 passgenau ein.

Der Pfeil zwischen den beiden **Figuren 1 a)** und **1 b)** zeigt, dass man beim Zusammenklicken von der Situation a) links zur Situation b) rechts kommt. Wie man erkennt liegen dann die Frontseiten 13 der beiden Formstücke 1, 2 satt aneinander an und die beiden Rückhalte-Elemente 8 liegen satt nebeneinander aneinander anliegend im Innern der beiden Nuten 3 und hakten mit ihren Hinterschnitt-Flächen als Widerhaken am hinteren Ende der stumpfwinkligen Pfeile an den Rückhalteflächen 18 an der Innenseite der Nuten 3 an. Insgesamt wurde eine satte, für die Rückhalte-Elemente 8 formschlüssige und auf Zugkraft belastbare Verbindung zwischen den beiden Formstücken 1, 2 erzeugt. Diese Verbindung lässt sich nicht durch eine umgekehrte Bewegung lösen. Es gibt nur zwei Möglichkeiten, um die Verbindung zu lösen, entweder erstens durch Verschieben der Formstücke 1, 2 gegeneinander im Bild senkrecht zur Blattebene, oder zweitens durch gewaltsame Zerstörung, etwa Aufschmelzen oder mechanisches Zerschlagen oder Zersägen der Verbindung. Diese hier gezeigten Formstücke können im Massstab 1 : 1 wie in den Figuren gezeigt hergestellt werden, entweder als Kunststoff-Strangprofile, die dann in gewünschten Tranchen vom Profil abgeschnitten werden, oder aber als Kunststoff-Spritzteile. Sie können indessen auch wesentlich kleiner oder wesentlich grösser hergestellt werden. Die hier in der **Figur 1** gezeigten Formstücke 1, 2, auf die man hier von oben sieht, können eine Stärke oder eine Dicke senkrecht zur Blattebene gesehen von ein paar Millimetern aufweisen, oder aber auch einige Zentimeter, oder gar, wenn als Strangprofile hergestellt, sich über mehrere Meter erstrecken und somit eigentliche zusammenklickbare Profile bilden.

Solche Formstücke können zum Verbinden X-beliebiger Bauteile eingesetzt werden, wo solche rasch, formschlüssig und auf Zugkraft belastbar miteinander unlösbar miteinander verbunden werden sollen. Die Formstücke 1, 2 können beim Anfertigen der Bauteile direkt aus dem Grundmaterial der Bauteile bestehen oder als Formstücke mit ihren Rückseiten auf die zu verbindenden Teile aufgeleimt, aufgeschweisst oder aufgeschraubt werden. Hierzu können die Bauteile mit viereckigen Nuten versehen sein, in welche die Formstücke 1, 2 formschlüssig und aussen bündig einpassen, sodass ihre Frontseiten 13 hernach also bündig mit den Vorderseiten der Bauteile verlaufen. Das Innere der Nuten 3 bzw. die Böden 10 der Nuten 3 bieten die Möglichkeit, mittels Bohrungen Löcher in den Boden 10 einzubringen, sodass die Formstücke 1, 2 mit ihren Nutenböden auf Bauteile aufgesetzt und mittels Schrauben mit denselben verschraubt werden können.

Die **Figur 2** zeigt eine Klick-Verbindung mit ähnlichem Aufbau. Die Formstücke 1, 2 weisen wiederum je eine Nut 3 auf. Im Unterschied zur Ausführung nach **Figur 1** sind hier die Rückhalte-Elemente 9 mit ihren Hinterschnitt-Flächen einstückig mit ihrem Ende direkt am hinteren Ende der Nuten 3 angeformt. So gehalten lassen sie sich elastisch im Innern der Nuten 3 hin und her schwenken. Wie man ausgehend von **Figur 2 a)** zu **Figur 2 b)** erkennt, passen die Rückhalte-Elemente 9 passgenau aneinander, wenn die Klick-Verbindung geschlossen wird. Jedes Rückhalte-Element 9 findet am jenseitigen Formstück 1, 2 selbst sowie am jenseitigen Rückhalte-Element 9 je eine Rückhaltefläche, an der es satt einrastet und anschliessend ist die Verbindung satt erstellt und auf Zug belastbar.

Die **Figur 3** zeigt wieder eine Ausführung, bei welcher die Rückhalte-Elemente 8 separat hergestellt wurden und in die Formstücke 1, 2 einsetzbar sind, nach dem gleichen System wie schon zu **Figur 1** vorgestellt. Die hinteren Enden der Rückhalte-Elemente 8 laufen in ein zylindrisches Teil 7 aus, das als Keder wirken kann, wobei dieser in Längsrichtung in die kreisförmige Aufnahmenut 14 hinten in der Nut in Richtung senkrecht zur Blattebene einschiebbar ist. Hernach können zwei solche Formstücke 1, 2 aus der Ausgangsposition wie in der **Figur 3 a)** links gezeigt und wie mit dem Pfeil angezeigt zur zusammengeklickten Position wie in **Figur 3 b)** dargestellt vereinigt werden. Damit wird eine satte und auf Zugkraft belastbare Verbindung geschaffen, und zwar innert Sekunden, durch einfachstes Zusammenschieben und automatisches Einklicken bzw. aneinander Verrasten.

Die Ausführung nach **Figur 4** ist eine weitere Variante. Hier ist die Nut 3 abgewandelt gestaltet und schliesst an ihrem hinteren Ende eine bogenförmige Ausnehmung 16 ein, die nach vorne eine zentrale Öffnung 19 aufweist. Am hinteren Ende der Rückhalte-Elemente 8 ist ein in diese bogenförmige Ausnehmung 16 einpassender Bogenschwanz 17 ausgeformt. Dieser erstreckt sich über eine geringere Distanz als die Länge der bogenförmigen Ausnehmung 16. Nach Einsetzen wie in **Figur 4 b)** gezeigt lassen sich die Rückhalte-Elemente 8 in diesen bogenförmigen Ausnehmungen 16 längs dieser Ausnehmungen 16 ein stückweit hin und her bewegen. Das Zusammenklicken erfolgt wie in **Figur 4 c)** gezeigt. Die Rückhalte-Elemente 8 bewegen sich aneinander vorbei, wobei ihre vorderen Enden ein stückweit elastisch seitlich ausweichen, um hernach an jeweils eigenen Rückhalteflächen einzurasten. Am Schluss ist eine satte, passgenaue und auf Zugkraft belastbare Verbindung erstellt wie in **Figur 4 d)** gezeigt, bei welcher die Frontseiten 13 der beiden Formstücke 1, 2 satt aneinander anliegen. Die Hinterschnitt-Flächen an den Rückhalte-Elementen 8 wirken dabei als Widerhaken an den Rückhalteflächen in den Nuten des jenseitigen Formstückes. In den eingesetzten Rückhalteelementen 8 ist eine Ausbuchtung ausgeformt die einen Querstabilisator bildet. In zusammengefügtem Zustand füllen diese Ausbuchtungen 23 den Zwischenraum quer zu der Richtung des Zusammensteckens und und bilden so einen Querbalken, der die genaue Fluchtung der beiden Formstücke 1 und 2 garantiert. Ein solcher Querstabilisator ist für alle Ausführungen einsetzbar.

Die **Figur 5** zeigt eine weitere besondere Ausführung. Links im Bild von Figur 5 a) ist ein einzelnes Formstück 1 mit seinem Rückhalte-Element 8 gezeigt, dessen beide Hinterschnittflächen 11 an seiner dreieckförmigen Spitze als Widerhaken wirken. Dieses ist mit seinem hinteren Ende wie schon in den Figur 1 gezeigt im hinteren Teil der Nut 3 in eine dortige kreisrunde Nut 14 eingeschoben. Man erkennt auch die beidseits abstehenden elastischen Flügel 12 an diesem Rückhalte-Element 8. Als Besonderheit ist nun das zugehörige zweite Formstück 15 als ein Vierfach-Profil ausgeführt, mit auf jeder Seite einer Nut 3, die identisch gestaltet sind wie jene im Formstück 1 links im Bild, und die ebenfalls mit einem identischen Rückhalte-Element 8 bestückt sind. Insgesamt weist dieses Vierfach-Profil hier einen kreuzförmigen Querschnitt auf, könnte aber auch ebenso gut aus Vollmaterial bestehen, das heisst insgesamt einen quadratischen Querschnitt aufweisen, wie strichliniert angedeutet. Ein solches Profil kann ein Strangpressprofil aus Aluminium oder Kunststoff sein, oder auch aus anderem Material wie etwa Holz durch Ausfräsungen hergestellt sein. Das Erstellen der Verbindung erfolgt auch hier durch einfaches Zusammenstecken unter Einrasten der sich nebeneinander einschiebenden Rückhalte-Elemente 8 an sich selbst sowie an der Innenseite der Nuten 3, wie man das anhand von **Figur 8b****)** leicht erkennt. Es ist klar, dass an allen vier Seiten anschliessende Formstücke einklickbar sind, sodass zum Beispiel auf allen vier Seiten Wandelemente oder beliebige andere Bauteile mittels dieser Klickverbindung angebaut werden können.

Die **Figur 6** zeigt abermals eine andere Ausführungsvariante. Sie zeigt eine Klick-Verbindung mit zwei Formstücken 1, 2 mit gesondert einsetzbaren Rückhalte-Elementen 8. Diese bilden mit ihren jeweils zwei gegenüberliegenden Hinterschnitt-Flächen 11 an ihrer pfeilförmigen Spitze je eine Rückhaltefläche. In **Figur 6 a)** sieht man diese zwei Formstücke 1, 2 links und rechts. Beim im Bild rechten Formstück 2 handelt es sich im Wesentlichen um ein U-Profil, das hier mit der offenen Seite der Nut 3 gegen links gerichtet abgelegt ist. Entsprechend öffnet das U-Profil mit seiner durch das Innere des U's gebildeten Nut 3 nach links. Die Nut 3 bildet einen Nutboden 10, und aus diesem Nutboten 10 ausgenommen erkennt man hier eine im Querschnitt kreisförmige Aufnahmenut 14. Auf der Innenseite der Nut 3 sind beidseits Nocken ausgeformt, welche je eine Rückhaltefläche 6 bilden. Ein zu diesem Formstück 2 zugehöriges Rückhalte-Element 8 ist mit seinem hinteren Ende 7 in die Aufnahmenut 14 von oben oder unten einschiebbar, also in Längsrichtung zur Aufnahmenut 14. Daher ist es anschliessend in dieser Aufnahmenut 14 schwenkbar aber zugkräftig gehalten. Im Formstück 1 auf der linken Seite der **Figur 6** ist dieses Rückhalte-Element 8 bereits mit seinem hinteren Ende 7 passgenau in die dortige Aufnahmenut 14 eingeführt und darin schwenkbar gelagert. Die beiden Rückhalte-Elemente 8 sowie die beiden Formstücke 1, 2 sind baugleich und daher austauschbar. Die Rückhalte-Elemente 8 laufen vorne in eine Spitze aus, wobei die Spitzen hier rautenförmig geformt sind. Sowohl die Formstücke 1, 2 wie auch die Rückhalte-Elemente 8 sind als flächige Elemente ausgeführt, das heisst die hier sichtbare obere Ebene ist eben, wie auch die Unterseite, mit der diese Elemente flach auf einer ebenen Unterlage aufliegen können. An jedem Rückhalte-Element 8 folgt nach der rautenförmigen Spitze mit ihren beidseitigen Kanten und Hinterschnitt-Flächen 11 als Rückhalte-Flächen ein Schwanzteil 21, das schliesslich in das Ende 7 ausläuft, welches mit seiner zylindrischen Form einen Keder bildet. Beidseits des Schwanzteils 21 des Rückhalte-Elementes 8 formt dieses hier je einen elastisch federnden Flügel 12 aus, welcher je eine Aussenkante 22 bildet.

Wenn die Rückhalte-Elemente 8 an beiden Formstücken 1, 2 eingesetzt sind, so überragen diese Rückhalte-Elemente 8 die Formstücke 1, 2 auf der offenen Seite der Nut 3. Werden sie nun mit ihren Stirnflächen 13 voran einander angenähert, so stellt sich das wie in **Figur 6 b)** gezeigt dar. Diese **Figur 6 b)** zeigt nämlich die Situation während des Zusammenschiebens bzw. Zusammensteckens der beiden Formstücke 1, 2 mit ihren Rückhalte-Elementen 8. Die Rückhalte-Elemente 8 schieben sich aneinander vorbei, wobei die elastischen Flügel 12 hierzu etwas zusammenschwenken, ehe sie die seitliche Aussenkante 22 und die anschliessende Hinterschnitt-Fläche 11 an der rautenförmigen Spitze des andern Rückhalte-Elementes 8 passiert haben. Schliesslich präsentiert sich die zusammengeklickte Verbindung wie in **Figur 6 c)** dargestellt. Es entstand eine satte, formschlüssige und auf eine gewisse Zugkraft belastbare Verbindung, die mit einer die maximale Zugkraft übersteigenden Gegenkraft wieder gelöst werden kann. Bei der Ausführung nach Figur 1 hingegen ist die erstellte Klick-Verbindung "kraftschlüssig" und nur durch eine Verschiebung der Teile gegeneinander quer zur Klick-Richtung oder durch Zerstörung lösbar.

In **Figur 7** ist eine weitere Ausführung einer Klick-Verbindung dargestellt, abermals mit dem einen Formstück 15 als Vierfach-Profil ausgeführt, aber mit insgesamt quadratischem Aussen-Querschnitt. Auf jeder Seite dieses Profils ist eine Nut 3 ausgenommen, und in deren Nutboden 10 ist je eine Aufnahmenut 14 ausgenommen. Diese ist für das kederförmige Ende, das heisst das zylinderförmige Ende 7 der Rückhalte-Elemente 8 bestimmt. An den Rückhalte-Elementen 8 gibt es zwei elastisch biegsame seitliche Flügel 12. Die Rückhalte-Elemente 8 sind in diesen Aufnahmenuten 14 schwenkbar gehalten, aber auf Zug belastbar. Ganz rechts in **Figur 7** sind die fertig zusammengesteckten beiden Formteile 1, 15 mit den ineinander verrasteten Rückhalte-Elementen 8 dargestellt. Die Nocken an den Wiederhaken-Elementen rasten dabei einerseits an Rückhalteflächen am inneren Rand der Nuten 3 ein sowie auch mit den Enden ihrer inneren elastischen Flügel an einem als Rückhaltefläche wirkenden Nocken am angrenzenden Rückhalte-Element 8 selbst.

Die **Figur 8** zeigt eine nochmals andere Ausführung, nach demselben Prinzip wirkend. Es sind wieder zwei Formstücke 1, 2 mit je einer offenen Nut 3 mit einer Aufnahmenut 14 in ihrem Nutboden 10 vorhanden. In diese Aufnahmenut 14 sind die zylinderförmigen Enden 7 der Rückhalte-Elemente 8 einschiebbar. Wenn das bei beiden Formstücken 1, 2 vollzogen ist, können die beiden Formstücke 1, 2 wie in **Figur 8 b)** gezeigt zueinander hin bewegt und zusammengepresst werden, sodass die Klickverbindung entsteht wie sie in **Figur 8 c)** gezeigt ist. Die Rückhalte-Elemente 8 rasten gegenseitig an sich ein, und ihre Hinterschnitt-Flächen 11 liegen dann an den Rückhalteflächen 18 an der Innenseite der Nut 3 an.

Die Figur 9 zeigt eine abermals andere Ausführung der Klickverbindung. Die beiden Rückhalte-Element 8 weisen eine dreieckförmige Spitze auf, die auf beiden Seiten je eine Hinterschnittfläche 11 bildet, sodass diese nach dem Zusammenklicken Widerhaken wirken und an hinterschnittenen Rückhalteflächen 18 in den Nuten 3 des gegenüberliegenden Formstückes einhaken. Die an den Rückhalte-Elementen 8 nach hinten abstehenden Federn 12 fördern eine satte Verbindung und verstärken die Klickverbindung im zusammengesetzten Zustand.

Für die künstlerische Gestaltung von Boden- und Wandelementen können zum Beispiel die Parkettplatten oder andere ähnliche Platten nach Belieben geschnitten werden und in die Schnittflächen kann mit einer Oberflächenfräse selber das Rahmenprofil bzw. die nötige Nut gefräst werden, sodass in diese auch wieder Doppel-Rückhalte-Elemente eingesetzt werden können. Dies ermöglicht unzählige Varianten beim Verlegen und Montieren von Elementen auf Böden, Decken, Wänden usw. Einer Mosaikgestaltung sind so keine Grenzen gesetzt.

Bei allen Ausführungen kann in der Stirnfläche, das heisst in der Verbindungsfläche 13 der Formstücke eine Nut vorgesehen werden, um eine Gummi-Dichtung aufzunehmen, die dann zwischen den zusammengeklickten Formstücken die Stirnflächen 13 abdichtet. Das ist vor allem für mit solchen Klick-Verbindungen auf Stoss zusammengebaute Innen- und Aussenwände von Immobilien vorteilhaft, damit im Schlitz der Verbindung kein Luftzug entstehen kann.

### Ziffernverzeichnis

- 1,2: Formstücke
- 3,4: Nut
- 4,5: Flankenseiten der Nut 3
- 6: Widerhaken, Rückhaltefläche
- 7: zylindrisches Ende der Rückhalteelemente 8
- 8: schwenkbar einsetzbares Rückhalte-Element
- 9: elastisch schwenkbares Rückhalte-Element am Nutboden
- 10: Nutboden
- 11: im Bereich der Spitze beidseits Widerhaken oder Rückhalte-Flächen wirkende Hinterschnitt-Flächen 11
- 12: beidseits federnde Flügel an den Rückhalte-Elementen
- 13: Stirnfläche/Frontseite/Verbindungsfläche des Formstückes
- 14: Aufnahmenut für Rückhalte-Element 8
- 15: Formstück als Mehrfachprofil
- 16: Bogennut für Aufnahme des Rückhalte-Elementes
- 17: Bogenschwanz des Rückhalte-Elementes
- 18: Rückhaltefläche auf Innenseite der Nuten 3
- 19: Zentrale Öffnung in bogenförmiger Ausnehmung 16
- 20: Körper des Rückhalte-Elementes
- 21: Schwanzteil des Rückhalte-Elementes
- 22: Aussenkante an Flügel 12 (Figur 9)
- 23: Seitliche Ausbuchtungen am Rückhalteelement (Figur 4)

## Patentansprüche

1. Klick-Verbindung für zwei miteinander satt und kraftschlüssig zu verbindende Formstücke (1, 2), mit zwei für die Verbindung identisch ausgeformten Formstücken (1, 2, 15), indem diese auf der Seite mit der zu verbindenden Fläche eine Nut (3) aufweisen, innerhalb welcher auf beiden Flankenseiten (4, 5) der Nut (3) Hinterschnitt-Flächen oder Nocken (6,18) als Rückhalteflächen ausgeformt sind, wobei ein auf zwei gegenüberliegenden Seiten wirkendes Rückhalte-Element in die Nut einschiebbar ist, und wobei weiter die Rückhalte-Elemente selbst elastisch biegsam sind oder hinten beidseits federnde Flügel (12) ausformen, sodass die zwei mit den offenen Seiten der Nuten (3) gegeneinander hin gerichteten Formstücke (1,2) durch überlappendes Ineinanderschieben der beiden Rückhalte-Elemente (8) unter federndem Verbiegen oder elastischem Nachgeben der Flügel (12, 25) zu einer formschlüssigen Verbindung zusammenklickbar sind, unter Einhaken oder Anschlagen der Rückhalte-Elemente (8) mit ihren Hinterschnitt-Flächen oder Rückhalteflächen (11) aneinander und an den Rückhalte-Flächen (6) in den Nuten der jeweils gegenüberliegenden Formstücke,
***dadurch gekennzeichnet,* dass** in der Nut (3) ein darin um eine Achse (7), die in Längsrichtung der Nut (3) verläuft, schwenkbar oder seitlich verschiebbar einsetzbares Rückhalte-Element (8) vorhanden ist, oder ein in dieser Nut um eine solche Achse elastisch schwenkbares Rückhalte-Element (9) am Nutboden (10) einstückig angeformt ist, wobei diese Rückhalte-Elemente (8, 9) die Nut (3) nach aussen überragen und im Bereich ihrer Spitze beidseits als Rückhalteflächen oder Widerhaken wirkende Hinterschnitt-Flächen (11) ausformen, und weiter dass die Rückhalte-Elemente (8, 9) selbst elastisch biegsam sind oder hinten beidseits federnde Flügel (12) ausformen, sodass die zwei mit den offenen Seiten der Nuten (3) gegeneinander hin gerichteten Formstücke (1,2) durch überlappendes Ineinanderschieben der beiden Rückhalte-Elemente (8, 9) unter federndem Verbiegen oder elastischem Nachgeben der Flügel (12) zu einer formschlüssigen satten und zugkraftschlüssigen Verbindung zusammenklickbar sind, unter Einhakens oder Anschlagens der Rückhalte-Elemente (8, 9) mit zugehörigen Hinterschnitt-Flächen (11) aneinander und in den Nuten der jeweils gegenüberliegenden Formstücke.

2. Klick-Verbindung nach Anspruch 1 für zwei miteinander satt und kraftschlüssig zu verbindende Formstücke (1, 2), ***dadurch gekennzeichnet,* dass** mindestens eines der Formstücke (1, 2, 15) ein Mehrfachprofil in Form eines Profils mit aussen kreuzförmigem Querschnitt bildet, wobei aus jeder Stirnseite dieses Profils eine Nut (3) zur verrastenden Aufnahme eines Rückhalte-Elementes (8) eines zweiten beliebigen Formstückes (1, 2, 15) mit ebensolcher Nut (3) ausgeformt ist.

3. Klick-Verbindung nach Anspruch 1 für zwei miteinander satt und kraftschlüssig zu verbindende Formstücke (1, 2), ***dadurch gekennzeichnet,* dass** mindestens eines der Formstücke (1, 2, 15) in Mehrfachprofil in Form eines Profils mit vieleckigem Querschnitt ist, das heisst mit drei- bis acht-eckigem Querschnitt, wobei aus jeder Stirnseite dieses Profils eine Nut (3) zur verrastenden Aufnahme eines Rückhalte-Elementes (8) eines zweiten beliebigen Formstückes (1, 2, 15) mit ebensolcher Nut (3) ausgeformt ist.

4. Klick-Verbindung nach einem der Ansprüche 1 bis 3 für zwei miteinander satt und kraftschlüssig zu verbindende Formstücke (1, 2), ***dadurch gekennzeichnet,* dass** die Rückhalte-Elemente (8) und die Formstücke (1, 2, 15) aus Strangpressprofilen durch tranchenweise Abtrennung in beliebiger Dicke erzeugt sind.

5. Klick-Verbindung nach einem der Ansprüche 1 bis 3 für zwei miteinander satt und kraftschlüssig zu verbindende Formstücke (1, 2), ***dadurch gekennzeichnet,* dass** die Rückhalte-Elemente (8) und die Formstücke (1, 2) aus Metall, Holz, Kunststoff oder Recyclingmaterial bestehen oder durch Paarung dieser Werkstoffe für die Formstücke (1, 2) und die Rückhalte-Elemente (8) erzeugt sind.

6. Klick-Verbindung nach einem der Ansprüche 1 bis 5 für zwei miteinander satt und kraftschlüssig zu verbindende Formstücke (1, 2), ***dadurch gekennzeichnet,* dass** die Rückhalte-Elemente (8) an ihrem Ende einen Bogenschwanz (17) formen, welcher mit seitlichem Spiel in eine bogenförmige Ausnehmung (16) mit nach vorne zentraler Öffnung (19) hinten in der Nut (3) auf beide Seiten hin verschiebbar einpasst (Figur 4).

7. Klick-Verbindung nach Anspruch 1 für zwei miteinander satt und kraftschlüssig zu verbindende Formstücke (1, 2), ***dadurch gekennzeichnet,* dass** die Rückhalte-Elemente auf zwei entgegengesetzte Seiten wirksam sind, indem sie auf beide Seiten hin je eine Nase (24) mit elastisch schwenkbaren Flügeln (25) bilden, und diese Nase (24) in Nuten (3) einschiebbar sind, wobei die Flügel (25) an den Nasen sich formschlüssig an die Seitenwände (29) der Nuten (3) anschmiegen und mit ihren rückwärtigen Enden an Nocken an der Öffnung der Nuten (3) einrasten.

8. Klick-Verbindung nach einem der vorangehenden Ansprüche für zwei miteinander satt und kraftschlüssig zu verbindende Formstücke (1, 2), **dadurch gekennzeichnet, dass** in den Stirnflächen (13) der Formstückes (1, 2) eine Nut ausgenommen ist, in die eine Gummi-Dichtung einlegbar ist, sodass nach Zusammenklicken von zwei Formstücken (12) eine dank der Gummidichtung eine luftdichte Verbindung der Formstücke (1,2) erstellt ist.

## Claims

1. Click connection for two shaped pieces (1, 2) to be connected to one another in a tight and force-locking manner, having two shaped pieces (1, 2, 15) which are identically shaped for the connection, in that they have a groove (3) on the side with the surface to be connected, within which groove (3) undercut surfaces or cams (6) are formed as retaining surfaces on both flank sides (4, 5) of the groove (3) undercut surfaces or cams (6) are formed as retaining surfaces, wherein a retaining element acting on two opposite sides can be inserted into the groove, and wherein furthermore the retaining elements themselves are elastically flexible or form resilient wings (12) at the rear on both sides, so that the two shaped pieces (1, 2), which are directed with the open sides of the grooves (3) towards one another, can be clicked together to form a form-fitting connection by overlapping nesting of the two retaining elements (8) with resilient bending or elastic yielding of the wings (12, 25), with hooking or striking of the retaining elements (8) with their undercut surfaces or retaining surfaces (11) against one another and against the retaining surfaces (6) in the grooves of the respectively opposite shaped pieces,
**characterised in that** a retaining element (8) which can be inserted in the groove (3) so as to be pivotable or laterally displaceable about an axis (7) extending in the longitudinal direction of the groove (3) is present in the groove (3), or a retaining element (9) which can be elastically pivoted about such an axis in this groove is integrally formed on the groove bottom (10), wherein these retaining elements (8, 9) project outwards beyond the groove (3) and in the region of their tip form undercut surfaces (11) acting as retaining surfaces or barbs on both sides, and further **in that** the retaining elements (8, 9) are themselves elastically flexible or form resilient wings (12) at the rear on both sides, so that the two shaped pieces (1, 2), which are directed with the open sides of the grooves (3) towards one another, can be secured together by overlapping nesting of the two retaining elements (8, 9) with resilient connection, 9), with resilient bending or elastic yielding of the wings (12), to form a form-locking and tension-locking connection, with the retaining elements (8, 9) hooking or abutting with associated undercut surfaces (11) against one another and in the grooves of the respectively opposite mouldings.

2. Click connection according to claim 1 for two shaped pieces (1, 2) to be connected to one another in a tight and force-locking manner, **characterised in that** at least one of the shaped pieces (1, 2, 15) forms a multiple profile in the form of a profile with an externally cross-shaped cross-section, wherein a groove (3) is formed out of each end face of this profile for the latching reception of a retaining element (8) of any second shaped piece (1, 2, 15) with such a groove (3).

3. Click connection according to claim 1 for two shaped pieces (1, 2) to be connected to one another in a tight and force-locking manner, **characterised in that** at least one of the shaped pieces (1, 2, 15) is a multiple profile in the form of a profile with a polygonal cross-section, i.e. with a triangular to octagonal cross-section, a groove (3) being formed out of each end face of this profile for the latching reception of a retaining element (8) of any second shaped piece (1, 2, 15) with such a groove (3).

4. Click connection according to one of the claims 1 to 3 for two shaped pieces (1, 2) to be connected to one another in a tight and force-locking manner, **characterised in that** the retaining elements (8) and the shaped pieces (1, 2, 15) are produced from extruded profiles by cutting off in tranches in any thickness.

5. Click connection according to one of the claims 1 to 3 for two shaped pieces (1, 2) to be connected to one another in a tight and force-locking manner, **characterised in that** the retaining elements (8) and the shaped pieces (1, 2) consist of metal, wood, plastic or recycled material or are produced by pairing these materials for the shaped pieces (1, 2) and the retaining elements (8).

6. Click connection according to one of the claims 1 to 5 for two shaped pieces (1, 2) to be connected to each other in a tight and force-locking manner, **characterised in that** the retaining elements (8) form an arcuate tail (17) at their end, which fits with lateral play into an arcuate recess (16) with a forwardly central opening (19) at the rear in the groove (3) so as to be displaceable on both sides (Figure 4).

7. Click connection according to claim 1 for two shaped pieces (1, 2) to be connected to each other in a tight and force-locking manner, **characterised in that** the retaining elements are effective on two opposite sides by forming a respective lug (24) with elastically pivotable wings (25) on both sides, and these lugs (24) are insertable into grooves (3), the wings (25) on the lugs fitting positively against the side walls (29) of the grooves (3) and engaging with their rear ends on cams at the opening of the grooves (3).

8. Click connection according to one of the preceding claims for two shaped pieces (1, 2) to be connected to one another in a tight and force-locking manner, **characterised in that** a groove is cut in the end faces (13) of the shaped piece (1, 2), into which groove a rubber seal can be inserted, so that after two shaped pieces (12) have been clicked together, an air-tight connection of the shaped pieces (1, 2) is produced thanks to the rubber seal.

## Revendications

1. Assemblage par encliquetage pour deux pièces moulées (1, 2) à assembler l'une à l'autre à fond et par adhérence, avec deux pièces moulées (1, 2, 15) formées de manière identique pour l'assemblage, en ce que celles-ci présentent, du côté de la surface à assembler, une rainure (3) à l'intérieur de laquelle, sur les deux côtés de flanc (4, 5) de la rainure (3), des surfaces en contre-dépouille ou des cames (6) sont formées en tant que surfaces de retenue, un élément de retenue agissant sur deux côtés opposés pouvant être inséré dans la rainure, et les éléments de retenue étant eux-mêmes élastiquement flexibles ou formant des ailes (12) élastiques des deux côtés à l'arrière, de sorte que les deux pièces moulées (1, 2) orientées l'une vers l'autre avec les côtés ouverts des rainures (3) peuvent être encliquetées ensemble en une liaison par complémentarité de forme par l'emboîtement en chevauchement des deux éléments de retenue (8) avec une flexion élastique ou un fléchissement élastique des ailes (12, 25), avec accrochage ou butée des éléments de retenue (8) avec leurs surfaces de contre-dépouille ou surfaces de retenue (11) l'une contre l'autre et contre les surfaces de retenue (6) dans les rainures des pièces moulées respectivement opposées,
**caractérisé en ce qu'**il est prévu dans la rainure (3) un élément de retenue (8) pouvant y être inséré de manière à pouvoir pivoter autour d'un axe (7) qui s'étend dans la direction longitudinale de la rainure (3) ou à pouvoir être déplacé latéralement, ou **en ce qu'**un élément de retenue (9) pouvant pivoter élastiquement dans cette rainure autour d'un tel axe est formé d'un seul tenant sur le fond de la rainure (10), ces éléments de retenue (8, 9) dépassant de la rainure (3) vers l'extérieur et formant dans la zone de leur pointe des surfaces de contre-dépouille (11) agissant des deux côtés comme surfaces de retenue ou crochets, et en outre **en ce que** les éléments de retenue (8, 9) sont eux-mêmes flexibles élastiquement ou forment à l'arrière des ailes élastiques (12) des deux côtés, de sorte que les deux pièces moulées (1, 2) dirigées l'une vers l'autre avec les côtés ouverts des rainures (3) peuvent être assemblées par l'emboîtement en chevauchement des deux éléments de retenue (8, 9) en pliant de manière élastique ou en cédant de manière élastique les ailes (12) pour former une liaison par complémentarité de forme et par force de traction, en accrochant ou en butant les éléments de retenue (8, 9) avec des surfaces de contre-dépouille (11) correspondantes les uns contre les autres et dans les rainures des pièces moulées respectivement opposées.

2. Assemblage par encliquetage selon la revendication 1 pour deux pièces moulées (1, 2) à assembler l'une à l'autre à fond et par adhérence, **caractérisé en ce qu'**au moins l'une des pièces moulées (1, 2, 15) forme un profilé multiple sous la forme d'un profilé à section transversale extérieure en forme de croix, une rainure (3) étant formée dans chaque face frontale de ce profilé pour recevoir par encliquetage un élément de retenue (8) d'une deuxième pièce moulée (1, 2, 15) quelconque avec une rainure (3) identique.

3. Assemblage par encliquetage selon la revendication 1 pour deux pièces moulées (1, 2) à assembler l'une à l'autre de manière étanche et par adhérence, **caractérisé en ce qu'**au moins l'une des pièces moulées (1, 2, 15) est un profilé multiple sous la forme d'un profilé à section polygonale, c'est-à-dire à section triangulaire à octogonale, une rainure (3) étant formée dans chaque face frontale de ce profilé pour recevoir par encliquetage un élément de retenue (8) d'une deuxième pièce moulée (1, 2, 15) quelconque avec une rainure (3) de ce type.

4. Assemblage par encliquetage selon l'une des revendications 1 à 3 pour deux pièces moulées (1, 2) à assembler l'une à l'autre de manière étanche et par adhérence, **caractérisé en ce que** les éléments de retenue (8) et les pièces moulées (1, 2, 15) sont fabriqués à partir de profilés extrudés par séparation par tranches d'une épaisseur quelconque.

5. Assemblage par encliquetage selon l'une des revendications 1 à 3, pour deux pièces moulées (1, 2) à assembler l'une à l'autre de manière étanche et par adhérence, **caractérisé en ce que** les éléments de retenue (8) et les pièces moulées (1, 2) sont en métal, en bois, en matière plastique ou en matériau recyclé, ou sont fabriqués par accouplement de ces matériaux pour les pièces moulées (1, 2) et les éléments de retenue (8).

6. Assemblage par encliquetage selon l'une des revendications 1 à 5 pour deux pièces moulées (1, 2) à assembler l'une à l'autre de manière étanche et par adhérence, **caractérisé en ce que** les éléments de retenue (8) forment à leur extrémité une queue arquée (17) qui s'adapte avec un jeu latéral dans un évidement arqué (16) avec une ouverture centrale vers l'avant (19) à l'arrière dans la rainure (3) de manière à pouvoir coulisser des deux côtés (figure 4).

7. Assemblage par encliquetage selon la revendication 1 pour deux pièces moulées (1, 2) à assembler l'une à l'autre à fond et par adhérence, **caractérisé en ce que** les éléments de retenue agissent sur deux côtés opposés en formant de chaque côté un nez (24) avec des ailes (25) pouvant pivoter élastiquement, et que ce nez (24) peut être inséré dans des rainures (3), les ailes (25) sur les nez s'adaptant par complémentarité de forme aux parois latérales (29) des rainures (3) et s'enclenchant par leurs extrémités arrière sur des cames à l'ouverture des rainures (3).

8. Assemblage par encliquetage selon l'une des revendications précédentes pour deux pièces moulées (1, 2) à assembler l'une à l'autre de manière étanche et par adhérence, **caractérisé en ce que** dans les surfaces frontales (13) des pièces moulées (1, 2) est ménagée une rainure dans laquelle peut être inséré un joint en caoutchouc, de sorte qu'après l'assemblage par encliquetage de deux pièces moulées (12), un assemblage étanche à l'air des pièces moulées (1, 2) est réalisé grâce au joint en caoutchouc.
